# EUROPEAN PATENT SPECIFICATION

(11) **EP 4 478 558 B1**
(45) Date of publication and mention of the grant of the patent: **04.03.2026**
(21) Application number: 23382597.5
(22) Date of filing: 15.06.2023
(51) Int. Cl.: H01R 24/78, H01R 13/453

(54) **ELECTRICAL OUTLET**
ELEKTRISCHE STECKDOSE
PRISE ÉLECTRIQUE

(43) Date of publication of application: 18.12.2024
(73) Proprietor: Schneider Electric España, S.A., 08019 Barcelona (ES)
(72) Inventor: VARGHESE, TENSEN, 08019 BARCELONA (ES); SANTESTEBAN INSAUSTI, PATXI, 08019 BARCELONA (ES); RUIZ DE LARRAMENDI, JOSE MIGUEL, 08019 BARCELONA (ES); GONZÁLEZ IRIBAS, AITOR, 08019 BARCELONA (ES)
(74) Representative: Plasseraud IP

(56) References cited:
- EP-A1- 2 456 024
- EP-A1- 3 651 277
- US-A1- 2002 157 851

## Description

### Technical Field

The present invention relates to electrical outlets intended for receiving an electrical plug, and more specifically to electrical outlets which comprise an axially movable cover which is flush with the outlet in the resting state.

### State of the Art

Currently, electrical outlets, which include a cavity for receiving a plug such that metal pins of said plug can be fitted into connection terminals of the outlet or socket such that an electrical connection is established between the plug and the socket, are widely known.

This cavity, however, has the drawback of accumulating dust and other unwanted particles. The cleaning of said cavity is limited or conditioned by the dimensions thereof, in addition to being hazardous due to the direct access it provides to the connection terminals.

As a solution, patent Document ES2719901B2, discloses an outlet with a cover for blocking access to the cavity, the cover being arranged movable with respect to the bottom and returnable to the end position of the cavity by return means, further comprising retention means for retaining the cover when it is in correspondence with the bottom such that the return of the cover is prevented by the action of the return means. Said cavity is part of a casing which is fixed to the switch box of the outlet, with said switch box being fixed, with the casing connected, to the framework fixed to the wall.

This configuration solves the problems posed by the movable cover and improves performance by blocking said cover so that the return means for returning the cover do not exert force thereon when the plug is inserted. However, at present, there is an increasing demand for outlets with improved aesthetic character, with outlets that are interchangeable, in order to change the color or external aesthetic appearance. In relation to these aesthetic requirements, in the mentioned document ES2719901B2, once the outlet is assembled with its casing with a movable cover, an aesthetic frame that provides the aesthetic appearance of the assembly is provided, with the casing usually having basic colors such as white and gray due to the difficult disassembly thereof.

While the aesthetic frame can be readily disassembled by the end user by prying it off for removal, the casing requires more knowledge as it poses more of a problem for removal. Access to the fixing legs of the casing is difficult since they are fixed to the switch box in the most hermetic way possible to avoid electrical hazards. Therefore, the movement of the switch box or even the breakage of the fitting housings thereof is possible when trying to remove said casing and this would hinder the installation of a new casing and result in a poor connection due to the possible movement of the switch box. Furthermore, once the casing is removed, the electrical outlets are accessible, which poses a high risk for inexperienced users who want to perform said disassembly.

In view of the described drawbacks or limitations of the solutions existing today, there is a need for a solution that allows easily exchanging the external appearance, while at the same time providing the advantages derived from the movable cover of the state of the art.

Furthermore, as an example, an electric socket comprising a shutter is described in EP 2456024 A1.

### Object of the Invention

For the purpose of meeting this objective and solving the technical problems discussed up until now, in addition to providing additional advantages that may be derived below, the present invention provides an electrical outlet according to claim 1, comprising:
- a subassembly with:
   - a casing with a cylindrical wall demarcating a cavity with a bottom,
   - a cover arranged to be movable with respect to the bottom comprising at least two holes and return means for returning the cover to the end of the casing,
   - a shutter movable between a position for shutting the holes and a position for opening the holes, being furthermore longitudinally movable together with the cover housed in a box that can be fixed to the cover,
   - recovery means for establishing the shutting of the holes;
- a switch box,
- and a framework for fixing to the wall with an opening for fitting the switch box which defines an inner edge,
wherein the switch box can be fixed to an inner border of the framework with snap-fitting means, the subassembly being able to be inserted into said switch box and fixed to the framework by means of snap-fitting means in housings on the inner edge of said framework, and further comprises an insulating covering that can be fixed to the inside of the switch box, arranged between the box and the subassembly.

As a result of this configuration, the subassembly, formed by the casing and the sliding cover comprising the shutter therein, can be readily extracted by accessing the snap-fitting means fixing same to the framework, such that the entire assembly is removed without the risk of the switch box in which said subassembly is housed experiencing alterations. Furthermore, there is arranged with the insulating covering that can be fixed to the inside of the switch box a protective barrier which prevents the user, who proceeds with the disassembly, from having any risk of accessing the electrical contacts upon extracting the subassembly. In this way, an outlet readily interchangeable by any inexperienced user to enable changing the aesthetic appearance, or to enable accessing the screws for adjusting the clamps of the framework, if said framework is misaligned, is obtained. In both cases, the removal and installation of the assembly is performed in a simple and risk-free manner, in addition to ensuring the integrity of the rest of the components.

According to another feature of the invention, the subassembly comprises on the outer surface of the cylindrical wall of the casing an extension that can be fitted into a recess of the framework such that in the assembled position said extension is retained between the framework and an aesthetic frame that can be fixed to said framework comprising an opening in correspondence with the casing with a cylindrical wall of the subassembly.

The casing is therefore sandwiched with its extension between the framework and the aesthetic frame, thus providing with the aesthetic frame an assured additional fixing of the subassembly since, in the case of extracting the plug, there is a possibility that the applied force partially pulls the subassembly because the press-fitting means of the subassembly do not withstand said force. In this case, the fixing strength of the fitting means adds to the fixing strength of the aesthetic frame to the framework, which provides a more robust outlet, and all this by means of a complete subassembly integrally comprising said extension. Preferably, said extension will be at least two extensions in the form of a flat projecting at opposite ends from the cylindrical wall, from an intermediate part of said cylindrical wall. Furthermore, even more preferably, the extension will be in the form of a continuous perimeter wall that projects from the cylindrical wall. The recess of the framework will have the same geometrical configuration as the extension, so that it fits perfectly.

Preferably, the snap-fitting means of the subassembly are arranged in the extension for fixing the subassembly to the framework. Preferably, said fitting means will be in the form of flexible legs which will be integrally arranged in the extension of the subassembly projecting from an intermediate part of the cylindrical wall of the casing. In this way, the extension fits into the recess of the framework and in turn the fitting means are housed in respective grooves of the framework, providing a more robust fixing.

Preferably, the box for housing the shutter comprises a semicircular housing for housing the recovery means, said recovery means being in the form of a curved spring.

This arrangement provides greater compactness and operation safety for the subassembly, such that it is not necessary to access the internal components thereof and such that the handling of the subassembly is only required when there is a need to access the set screws of the switch box or to replace the subassembly with another subassembly due to aesthetic requirements.

Preferably, the box comprises a grounding access hole. In this way, together with the guidance provided by the cylindrical wall and the side guides to the sliding cover, there is added the guidance provided by said hole and the grounding if it is present for said embodiment. Jamming and misalignments of the cover are prevented, reinforcing the integrity of the subassembly. Preferably, the box comprises a stop wall for stopping the movement of the shutter, such that the rotational movement of the shutter is stopped to avoid forcing the retaining means arranged at the bottom of the casing which would necessitate the complete replacement of the subassembly. Additionally, the box preferably comprises a window for accessing the retention means of the shutter, such that said retention means are protected.

Preferably, it is envisaged for the box to have a geometry in correspondence with a guidance housing at the bottom of the cavity of the cylindrical wall such that, upon moving to the bottom, it is fitted into said guidance housing, and furthermore for said box to comprise a perimeter reinforcement rib and/or intermediate ribs, which provide greater robustness to the box to prevent it from breaking and to ensure that the shutter perfectly fulfills its function.

### Description of the Figures

Figure 1 shows an exploded perspective view of the outlet object of the invention.
Figure 2 shows a perspective view of the rear part of the subassembly of the outlet.
Figure 3 shows a view of the outlet assembly assembled without the aesthetic frame.
Figure 4 shows a perspective view of the box of the subassembly.
Figure 5 shows a front view of the subassembly without the sliding cover to better see the inside thereof.

### Detailed Description of the Invention

In view of the mentioned figures and in accordance with the adopted numbering, a preferred exemplary embodiment of the invention may be observed therein, which comprises the parts and elements that are indicated and described in detail below.

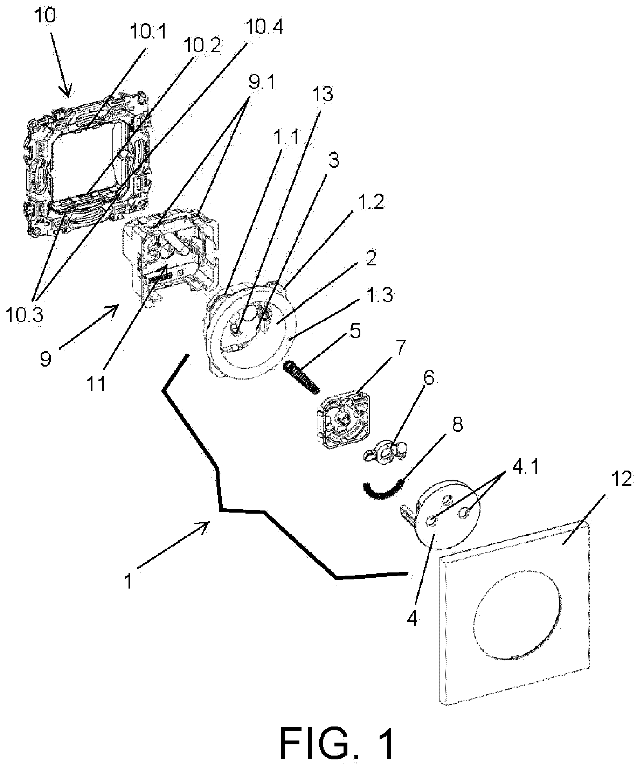

According to the practical embodiment of the figures, as can be seen in Figure 1, the outlet object of the invention comprises a framework (10) to which a switch box (9) is fixed. For said fixing, the framework (10) comprises a border (10.2) projecting towards the inside of the framework (10) in the hole therein for housing the switch box (9), and the switch box (9) itself comprises press-fitting means (9.1) in the form of flexible legs.

Once the switch box (9) is fixed to the framework (10), the step of assembling a subassembly (1) would commence. However, it should be mentioned that in this case the switch box (9) itself, as can be seen in Figure 1, already incorporates an insulating covering (11) which provides protection against contact with the terminals of the switch box (9). This insulating covering (11) can preferably be fixed to the box at the bottom (3) thereof by elastic fixing means.

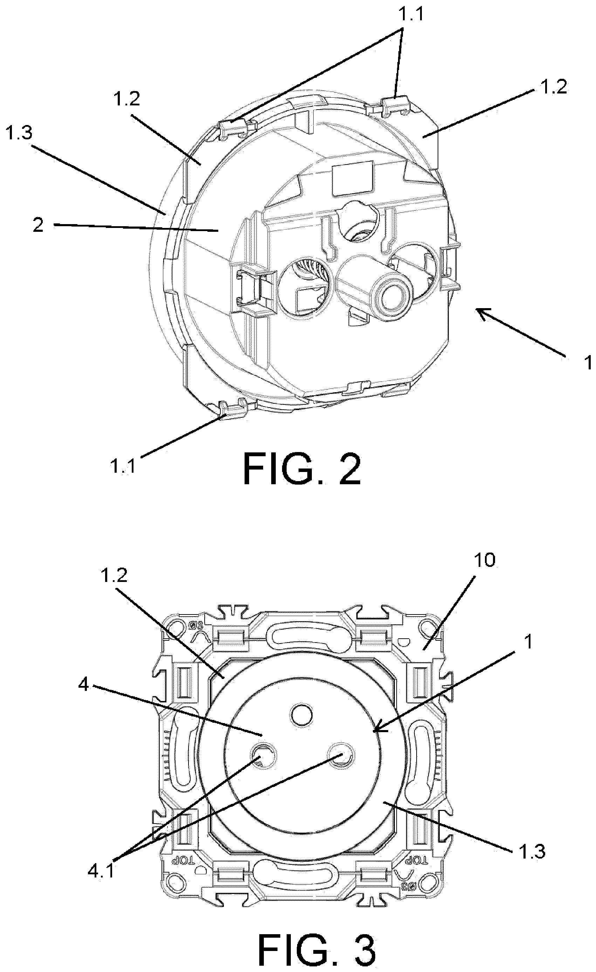

Next, the subassembly (1) is inserted into the switch box (9) and fixed by press-fitting means (1.1) in the framework (10). Preferably, as can be seen in Figure 2, said press-fitting means (1.1) are in the form of flexible legs, which are inserted into corresponding housings (10.3) of the framework (10) arranged at its inner edge (10.1) corresponding to the hole for housing the switch box (9).

More preferably, said press-fitting means (1.1) are arranged in an extension (1.2) of the subassembly (1) projecting from an intermediate part of the cylindrical wall of the casing (2). In this case, said extension (1.2) consists of an independent flat in each corner in correspondence with a recess (10.4) of the framework (10). In this way, the extension (1.2) fits into the recess (10.4) while the press-fitting means (1.1) are housed in the housings (10.3) at the same time, completely covering the switch box (9). Furthermore, and in order to follow the aesthetic trend, in the practical embodiment shown in the figures, the casing (2) of the subassembly (1) comprises a decorative ring (1.3) which is arranged integrally in the outer part of the casing (2), this decorative ring (1.3) covers the access to the screws for adjusting the clamps of the framework (10).

The assembled subassembly (1) of the casing (2) together with the sliding cover (4) would thus be fixed to the framework (10), leaving only the outer aesthetic frame (12) to be fixed. Said aesthetic frame (12) has a hole in correspondence with the outer decorative ring (1.3), such that upon fixing the aesthetic frame (12) on the framework (10), the extension (1.2) of the casing (2) is pressed by way of a sandwich between the framework (10) and the aesthetic frame (12). This configuration provides additional reinforcement which acts like a stop to prevent the subassembly (1) from coming out in an undesired manner from the fixing of the subassembly (1) to the framework (10).

With this assembled arrangement, any inexperienced user could change the outlet aesthetically by removing the aesthetic frame (12) and accessing the press-fitting means (1.1) to disassemble the subassembly (1) from the framework (10) and replace same with another new one in a simple and risk-free manner. This ease of disassembly is also useful to enable accessing the screws for adjusting the clamps of the framework (10) when misalignments occur. For both cases, the entire subassembly (1) can be readily removed without interfering with the switch box (9) and without any risk of contact with the terminals since there is an insulating covering (11) that prevents the user from directly contacting same.

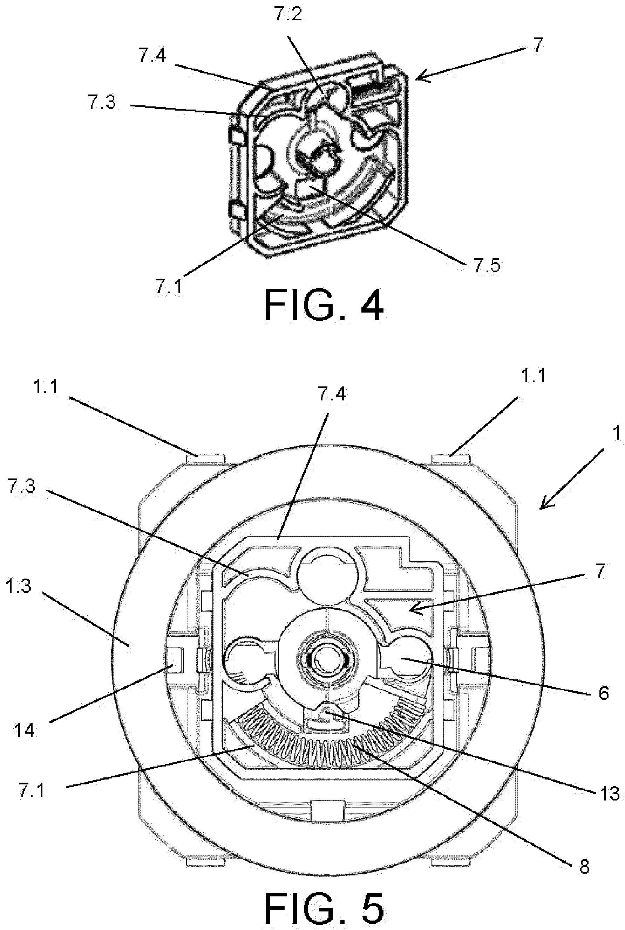

Said subassembly (1), like in the state of the art, comprises assembled therein a mechanism for moving the cover (4) with return means (5) preferably in the form of a conical spring, and further comprises a shutter (6) to cover the access through the holes (4.1) to the terminals when the plug is not connected. As can be seen in Figures 1 and 5, the subassembly, like in the state of the art, comprises retention means (13) in the form of a protrusion providing a housing for a tab of the shutter (6) for retaining the cover (4) in correspondence with the bottom (3) when the plug is introduced.

However, the configuration of the box (7) for housing the shutter (6) has been provided with distinctive features which provide robustness to the subassembly (1). Thus, said box (7) is fixed to the sliding cover (4) by means of tabs, with the shutter (6) being fixed between the box (7) and the sliding cover (4). The box (7) therefore has a preferably quadrangular geometry with a perimeter rib (7.4) which reinforces said box (7) to prevent the bending thereof and to prevent the shutter (6) from not performing its function properly.

The box (7) comprises a semicircular housing (7.1) in which there are housed recovery means (8) for recovering the closed position of the shutter (6). Said recovery means (8) are in the form of a curved spring, such that recovery of the most efficient position in the rotational movement of the shutter (6) is provided, furthermore resulting in a more compact and resistant solution that prevents the need to disassemble the subassembly (1).

According to another feature of the box (7), it comprises a stop wall (7.3) which works as an end of travel for the shutter (6) such that the retention means (13) are not forced, thereby preventing the breakage thereof.

An electrical outlet of greater robustness and ease of assembly and replacement of only the entire subassembly, if necessary, is thereby obtained.

## Claims

1. An electrical outlet comprising:
- a subassembly (1) with:
- a casing (2) with a cylindrical wall demarcating a cavity with a bottom (3),
- a cover (4) arranged to be movable with respect to the bottom (3) comprising at least two holes (4.1) and return means (5) for returning the cover (4) to the end of the casing (2),
- a shutter (6) movable between a position for shutting the holes (4.1) and a position for opening the holes (4.1), being furthermore longitudinally movable together with the cover (4) housed in a box (7) that can be fixed to the cover (4),
- recovery means (8) for establishing the shutting of the holes (4.1);
- a switch box (9),
- and a framework (10) for fixing to the wall with an opening for fitting the switch box (9) which defines an inner edge (10.1),
wherein the switch box (9) can be fixed to an inner border (10.2) of the framework (10) with snap-fitting means (9.1), and wherein the electrical outlet comprises an insulating covering (11) that can be fixed to the inside of the switch box (9), arranged between the box (9) and the subassembly (1),
**characterized in that** the subassembly (1) being able to be inserted into said switch box (9) and fixed to the framework (10) by press-fitting means (1.1) in housings (10.3) on the inner edge (10.1) of said framework (10), and
wherein the subassembly (1) comprises on the outer surface of the casing (2) an extension (1.2) that can be fitted into a recess (10.4) of the framework (10) such that in the assembled position said extension (1.2) is retained between the framework (10) and an aesthetic frame (12) that can be fixed to said framework (10) comprising an opening in correspondence with the cylindrical wall of the casing (2) of the subassembly (1).

2. The electrical outlet according to the preceding claim, wherein the press-fitting means (1.1) of the subassembly (1) are arranged in the extension (1.2) for fixing the subassembly (1) to the framework (10).

3. The electrical outlet according to any one of the preceding claims, wherein the box (7) for housing the shutter (6) comprises a semicircular housing (7.1) for housing the recovery means (8) in the form of a curved spring.

4. The electrical outlet according to any one of the preceding claims, wherein the box (7) for housing the shutter (6) comprises a grounding access hole (7.2).

5. The electrical outlet according to any one of the preceding claims, wherein the box (7) for housing the shutter (6) comprises a stop wall (7.3) for stopping the movement of the shutter (6).

6. The electrical outlet according to any one of the preceding claims, wherein the box (7) for housing the shutter (6) has a geometry in correspondence with a guidance housing at the bottom (3) of the cavity of the casing (2), comprising a perimeter reinforcement rib (7.4) and/or intermediate ribs.

7. The electrical outlet according to the preceding claim, wherein the box (7) comprises a window (7.5) for accessing retention means (13) arranged at the bottom (3) of the cavity of the casing (2), which interact with the shutter (6) to prevent the return of the cover (4) when it is in correspondence with the bottom (3) of the cavity.

## Patentansprüche

1. Elektrische Steckdose, aufweisend:
- eine Unterbaugruppe (1) mit:
- einem Gehäuse (2) mit einer zylindrischen Wand, die einen Hohlraum mit einem Boden (3) begrenzt;
- einer Abdeckung (4), die derart eingerichtet ist, dass sie bezüglich des Bodens (3) beweglich ist, und mindestens zwei Löcher (4.1) und eine Rückstelleinrichtung (5) zum Zurückstellen der Abdeckung (4) zum Ende des Gehäuses (2) aufweist;
- einer Blende (6), die zwischen einer Position zum Verschließen der Löcher (4.1) und einer Position zum Öffnen der Löcher (4.1) bewegbar ist und außerdem zusammen mit der Abdeckung (4) in Längsrichtung bewegbar ist und in einer Box (7) aufgenommen ist, die an der Abdeckung (4) fixierbar ist;
- einer Rückstelleinrichtung (8) zum Veranlassen des Verschließens der Löcher (4.1);
- einer Einbaudose (9); und
- einem Rahmen (10) zum Fixieren an der Wand mit einer Öffnung zum Einpassen der Einbaudose (9), der einen inneren Rand (10.1) definiert,
wobei die Einbaudose (9) durch eine Schnappbefestigungseinrichtung (9.1) an einem inneren Rand (10.2) des Rahmens (10) fixierbar ist, und wobei die elektrische Steckdose eine isolierende Abdeckung (11) aufweist, die an der Innenseite der Einbaudose (9) fixierbar ist und zwischen der Box (9) und der Unterbaugruppe (1) angeordnet ist,
**dadurch gekennzeichnet, dass** die Unterbaugruppe (1) dazu eingerichtet ist, in die Einbaudose (9) eingesetzt zu werden und durch Einpresseinrichtungen (1.1) in Gehäusen (10.3) am inneren Rand (10.1) des Rahmens (10) am Rahmen (10) fixiert zu werden, und
wobei die Unterbaugruppe (1) auf der Außenfläche des Gehäuses (2) eine Erweiterung (1.2) aufweist, die in eine Vertiefung (10.4) des Rahmens (10) einpassbar ist, so dass in der montierten Position die Erweiterung (1.2) zwischen dem Rahmen (10) und einem Dekorrahmen (12) gehalten wird, der am Rahmen (10) fixierbar ist und eine Öffnung aufweist, die der zylindrischen Wand des Gehäuses (2) der Unterbaugruppe (1) entspricht.

2. Elektrische Steckdose nach dem vorangehenden Anspruch, wobei die Einpresseinrichtungen (1.1) der Unterbaugruppe (1) in der Erweiterung (1.2) angeordnet sind, um die Unterbaugruppe (1) am Rahmen (10) zu fixieren.

3. Elektrische Steckdose nach einem der vorangehenden Ansprüche, wobei die Box (7) zum Aufnehmen der Blende (6) ein halbkreisförmiges Gehäuse (7.1) zum Aufnehmen der Rückstelleinrichtung (8) in der Form einer gebogenen Feder aufweist.

4. Elektrische Steckdose nach einem der vorangehenden Ansprüche, wobei die Box (7) zum Aufnehmen der Blende (6) eine Erdungszugangsöffnung (7.2) aufweist.

5. Elektrische Steckdose nach einem der vorangehenden Ansprüche, wobei die Box (7) zum Aufnehmen der Blende (6) eine Anschlagwand (7.3) zum Stoppen der Bewegung der Blende (6) aufweist.

6. Elektrische Steckdose nach einem der vorangehenden Ansprüche, wobei die Box (7) zum Aufnehmen der Blende (6) eine Geometrie aufweist, die einem Führungsgehäuse am Boden (3) des Hohlraums des Gehäuses (2) entspricht, und eine Umfangsverstärkungsrippe (7.4) und/oder Zwischenrippen aufweist.

7. Elektrische Steckdose nach dem vorangehenden Anspruch, wobei die Box (7) ein Fenster (7.5) für einen Zugang zu einer Halteeinrichtung (13) aufweist, die am Boden (3) des Hohlraums des Gehäuses (2) angeordnet ist und mit der Blende (6) zusammenwirkt, um das Rückstellen der Abdeckung (4) zu verhindern, wenn diese sich auf dem Niveau des Bodens (3) des Hohlraums befindet.

## Revendications

1. Prise électrique comprenant :
- un sous-ensemble (1) avec :
- un boîtier (2) avec une paroi cylindrique délimitant une cavité avec un fond (3),
- un couvercle (4) agencé pour être mobile par rapport au fond (3) comprenant au moins deux trous (4.1) et des moyens de retour (5) pour ramener le couvercle (4) à l'extrémité du boîtier (2),
- un volet (6) mobile entre une position pour obturer les trous (4.1) et une position pour ouvrir les trous (4.1), qui est en outre mobile longitudinalement conjointement avec le couvercle (4) contenu dans une boîte (7) qui peut être fixée au couvercle (4),
- des moyens de récupération (8) pour établir l'obturation des trous (4.1) ;
- une boîte (9) de commutation,
- et un cadre (10) pour être fixé à la paroi avec une ouverture pour tenir la boîte (9) de commutation qui définit un bord intérieur (10.1),
dans laquelle la boîte (9) de commutation peut être fixée à une bordure intérieure (10.2) du cadre (10) avec des moyens d'encliquetage (9.1), et dans laquelle la prise électrique comprend un revêtement isolant (11) qui peut être fixé à l'intérieur de la boîte (9) de commutation, agencé entre la boîte (9) et le sous-ensemble (1),
**caractérisée en ce que** le sous-ensemble (1) peut être inséré dans ladite boîte (9) de commutation et fixé au cadre (10) par des moyens d'encliquetage (1.1) dans des logements (10.3) sur le bord intérieur (10.1) dudit cadre (10), et
dans laquelle le sous-ensemble (1) comprend sur la surface extérieure du boîtier (2) une extension (1.2) qui peut tenir dans un évidement (10.4) du cadre (10) de sorte que dans la position assemblée ladite extension (1.2) soit retenue entre le cadre (10) et un cadre esthétique (12) qui peut être fixé audit cadre (10) comprenant une ouverture en correspondance avec la paroi cylindrique du boîtier (2) du sous-ensemble (1).

2. Prise électrique selon la revendication précédente, dans laquelle les moyens d'encliquetage (1.1) du sous-ensemble (1) sont agencés dans l'extension (1.2) pour fixer le sous-ensemble (1) au cadre (10).

3. Prise électrique selon l'une quelconque des revendications précédentes, dans laquelle la boîte (7) pour contenir le volet (6) comprend un logement semi-circulaire (7.1) pour contenir les moyens de récupération (8) sous la forme d'un ressort incurvé.

4. Prise électrique selon l'une quelconque des revendications précédentes, dans laquelle la boîte (7) pour contenir le volet (6) comprend un trou d'accès de mise à la terre (7.2).

5. Prise électrique selon l'une quelconque des revendications précédentes, dans laquelle la boîte (7) pour contenir le volet (6) comprend une paroi d'arrêt (7.3) pour arrêter le mouvement du volet (6).

6. Prise électrique selon l'une quelconque des revendications précédentes, dans laquelle la boîte (7) pour contenir le volet (6) a une géométrie en correspondance avec un logement de guidage au fond (3) de la cavité du boîtier (2), comprenant une nervure de renfort périmétrique (7.4) et/ou des nervures intermédiaires.

7. Prise électrique selon la revendication précédente, dans laquelle la boîte (7) comprend une fenêtre (7.5) pour accéder à des moyens de retenue (13) agencés au fond (3) de la cavité du boîtier (2), qui interagissent avec le volet (6) pour empêcher le retour du couvercle (4) lorsqu'il est en correspondance avec le fond (3) de la cavité.
